# EUROPÄISCHE PATENTSCHRIFT

(11) **EP 2 450 492 B1**
(45) Veröffentlichungstag und Bekanntmachung des Hinweises auf die Patenterteilung: **27.03.2019**
(21) Anmeldenummer: 10190458.9
(22) Anmeldetag: 09.11.2010
(51) Int. Cl.: E03D 11/14, F16B 37/08

(54) **System zum Befestigen eines Sanitärartikels**
System for attaching a sanitary item
Système de fixation d'un article sanitaire

(43) Veröffentlichungstag der Anmeldung: 09.05.2012
(73) Patentinhaber: Geberit International AG, 8645 Jona (CH)
(72) Erfinder: Lechner, Peter, 8645 Jona (CH)
(74) Vertreter: Frischknecht, Harry Ralph

(56) Entgegenhaltungen:
- EP-A1- 1 338 806
- EP-A2- 0 744 503
- DE-A1- 1 903 872
- US-A1- 2010 166 525

## Beschreibung

### TECHNISCHES GEBIET

Die vorliegende Erfindung betrifft ein System zum Befestigen eines Sanitärartikels.

### STAND DER TECHNIK

Aus der EP 0 744 503 ist eine Vorrichtung zur Befestigung von Sanitärartikeln bekannt. Diese Vorrichtung umfasst ein Muttergehäuse, welches mit einer auf zwei Seiten mit seitlichen Anfräsungen versehene Gewindestange in Verbindung gebracht werden kann. Wenn der Installateur die Gewindestange bezüglich der Mutter ausgerichtet hat, so kann die Gewindestange mittels einer Längsbewegung in die Mutter eingeschoben werden. Dadurch wird ein aufwendiges Eindrehen der Gewindespindel vermieden. Sobald die gewünschte Tiefe erreicht wird, können verschiedene Elemente um die Längsachse der Gewindestange um 90° verdreht werden, wobei so eine Rastverbindung zwischen Gewindestange und Mutter bereitgestellt wird.

Obwohl mit der Umsetzung der technischen Lehre nach der EP 0 744 503 sehr gute Resultate erzielt wurden und die Montagezeit gegenüber anderen Lösungen erheblich verkleinert wurde, hat diese Lehre den Nachteil, dass die Anpassung einer handelsüblichen Gewindestange mit den beiden Anfräsungen sehr kostenintensiv ist.

Aus den US 2010/166525, der EP 1 338 806 und der DE 19 03 872 sind weitere Systeme zur schnellen Befestigung einer Gewindestange mit mutterähnlichen Gegenstücken bekannt geworden.

### DARSTELLUNG DER ERFINDUNG

Ausgehend von diesem Stand der Technik stellt sich der Erfindung die Aufgabe, eine Vorrichtung anzugeben, welche die Nachteile des Standes der Technik überwindet. Insbesondere soll eine Vorrichtung angegeben werden, welche die Verwendung handelsüblicher Stangen, insbesondere Gewindestangen oder Zahnstangen, ermöglicht, wobei die Stangen möglichst einfach und schnell mit dem Klemmelement verbunden werden sollen.

Eine solche Aufgabe löst ein System nach Anspruch 1. Demgemäss umfasst ein System zum Befestigen eines Sanitärartikels, beispielsweise einer Klosettschüssel oder eines Urinals an einer Gebäudewand oder einem festen Gestell, wenigstens eine Stange mit einer Aussenzahnung und eine Halteeinheit mit einem zur Aussenzahnung komplementären Zahnungsabschnitt. Die Stange ist bezüglich der Halteeinheit entlang ihrer Längsachse in Montagerichtung verschiebbar und bezüglich einer Bewegung entgegen der Montagerichtung durch diese klemmbar. Die Halteeinheit umfasst mindestens zwei Klemmflächen zur Klemmung der Stange, wovon mindestens eine Klemmfläche bezüglich der Stange bewegbar ausgebildet ist, wobei diese Klemmfläche durch die Bewegung der Stange in Montagerichtung von einer die Stange klemmenden Stellung in eine die Stange freigebende Stellung bewegbar ist, und wovon mindestens eine Klemmfläche den komplementären Zahnungsabschnitt umfasst. Aufgrund der Bewegbarkeit der mindestens einen Klemmfläche kann mit einem solchen System eine handelsübliche Stange eingesetzt werden. Weiter ist die mindestens eine Klemmfläche Teil eines Klemmelementes, welches bezüglich der Stange bewegbar, insbesondere verschwenkbar, in der Halteeinheit gelagert ist. Das Klemmelement umfasst weiter eine Anfasung, über welche die Stange das Klemmelement beim Einschieben der Stange in die Halteeinheit verschwenkt. Somit wird beim Einschieben der Stange kein Werkzeug benötigt.

Vorzugsweise ist mindestens eine der Klemmflächen bezüglich der Stange feststehend in bzw. an der Halteeinheit angeordnet. Durch diese beiden vorteilhaften Elemente kann eine bezüglich den Herstellkosten besonders vorteilhafte Lösung bereitgestellt werden.

Die bewegbare Klemmfläche ist vorteilhafterweise um eine Drehachse bewegbar, wobei die Drehachse im wesentlichen senkrecht und beabstandet zur Längsachse der Stange verläuft.

Die Klemmflächen weisen vorzugsweise die Gestalt einer konkaven Ausnehmung auf, welche sich entlang der Längsachse erstrecken, wobei die konkave Ausnehmung komplementär zur Stangenoberfläche ausgebildet ist. Folglich wird die Stange gut durch die Ausnehmung aufgenommen.

Vorzugsweise ist der Zahnungsabschnitt an der Klemmfläche des bewegbaren Klemmelementes angeordnet und/oder die feststehende Klemmfläche weist im wesentlichen eine glatte oder eine die Reibung zwischen der Stange und der Klemmfläche erhöhende Struktur auf.

Vorzugsweise steht die erste Klemmfläche geneigt zur zweiten Klemmfläche, wobei die Neigung derart ist, dass die lichte Weite zwischen der ersten Klemmfläche und der zweiten Klemmfläche in der die Stange klemmenden Position in Montagerichtung gesehen über die Länge der Klemmflächen abnimmt. Hierdurch wird die Stange besonders gut geklemmt und die Klemmkraft wird bei einer Zugbelastung gegen die Montagerichtung verbessert.

Bevorzugterweise sind das Klemmelement und die zweite Klemmfläche in einem gemeinsamen Gehäuse mit mindestens einer durchgehenden Frontöffnung angeordnet, wobei das Klemmelement über Drehpunkte, die die Drehachse definieren, mit dem Gehäuse in Verbindung steht.

Vorteilhafterweise steht das Klemmelement mit mindestens einem Federelement in Verbindung, welches das Klemmelement mit einer Federkraft gegen die Stange verspannt, wobei das Federmittel insbesondere mit dem Gehäuse in Verbindung steht oder am Gehäuse angeformt ist.

Vorzugsweise weist die Stange die Gestalt einer Gewindestange mit einem Aussengewinde als Aussenzahnung auf, und der Zahnungsabschnitt weist die Gestalt eines Gewindeabschnittes auf, welcher sich über eine konkav ausgebildete Oberfläche erstreckt.

Weitere vorteilhafte Ausführungsformen werden in den abhängigen Ansprüchen dargelegt.

### KURZE BESCHREIBUNG DER ZEICHNUNGEN

Bevorzugte Ausführungsformen der Erfindung werden im Folgenden anhand der Zeichnung beschrieben, die lediglich zur Erläuterung dienen und nicht einschränkend auszulegen sind. In der Zeichnung zeigt:
- Fig. 1: eine Schnittdarstellung entlang der Schnittlinie I-I von Figur 4 einer ersten Ausführungsform eines Systems zur Befestigung eines Sanitärartikels, wobei sich die Vorrichtung in der Montagestellung befindet;
- Fig. 2: eine Schnittdarstellung der Figur 1, wobei die Gewindestange von der Vorrichtung geklemmt ist;
- Fig. 3: eine perspektivische Ansicht des Systems; und
- Fig. 4: eine perspektivische Ansicht des Systems im eingebauten Zustand hinter einer Frontplatte.

### BESCHREIBUNG BEVORZUGTER AUSFÜHRUNGSFORMEN

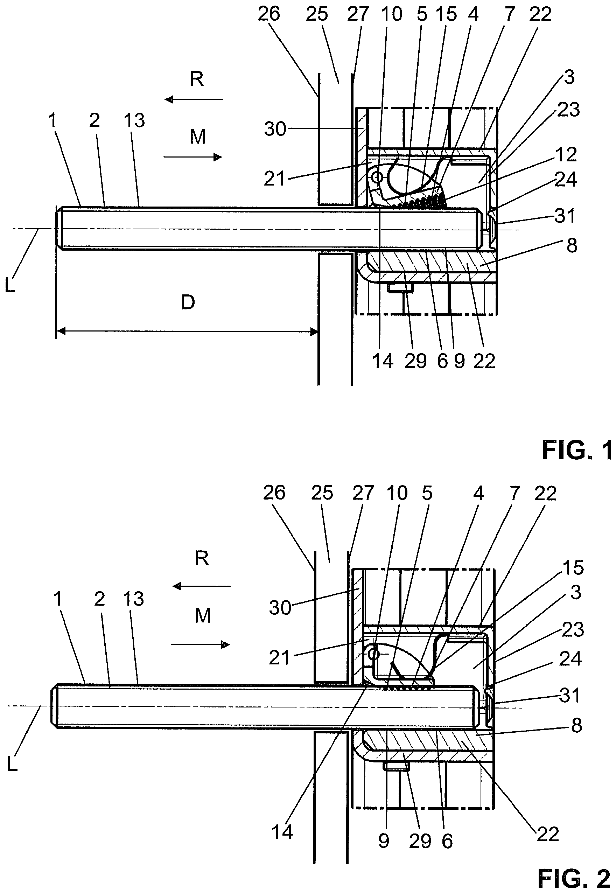

Die Figuren 1 und 2 zeigen eine Ausführungsform eines Systems zur Befestigung eines in den Figuren nicht dargestellten Sanitärartikels, wie beispielsweise einer Klosettschüssel oder eines Urinals, an einer Gebäudewand. Das System wird dabei derart zur Gebäudewand 25 angeordnet, dass eine Stange 1 sich über eine vordere Oberfläche 26 erstreckt und der Aufnahme des Sanitärartikels dient. Bezüglich der Oberfläche 26 ist das System hinter der Gebäudewand 25 im Bereich der hinteren Oberfläche 27 angeordnet und von der Seite des Sanitärartikels gesehen deshalb nicht einsehbar. Die Stange 1 ragt von der Oberfläche 26 gesehen in bzw. durch den Sanitärartikel hindurch und dieser wird dann durch ein geeignetes Befestigungsmittel, wie beispielsweise mit einer Mutter, zur Stange 1 befestigt.

Das System umfasst im wesentlichen eine Stange 1 mit einer Aussenzahnung 2 und eine Halteeinheit 3 mit einem Zahnungsabschnitt 4, welcher zur Aussenzahnung 2 komplementär ausgebildet ist. Folglich kann der Zahnungsabschnitt 4 in die Aussenzahnung 2 eingreifen. Bezüglich der feststehenden Halteeinheit 3, welche im Bereich der hinteren Oberfläche 27 angeordnet ist, ist die Stange 1 entlang ihrer Längsachse L in Montagerichtung M verschiebbar, so dass die überstehende Länge D der Stange 1 bezüglich der vorderen Oberfläche 26 der Gebäudewand 25 einstellbar ist. Bezüglich einer Bewegung entgegen die Montagerichtung M, in den Figuren mit R gezeigt, ist das System so ausgebildet, dass die Stange 1 von der Halteeinheit 3 geklemmt wird und somit eine relative Verschiebung zwischen Stange 1 und Halteeinheit 3 verhindert wird.

Für die Bereitstellung der Klemmung der Stange 1 umfasst die Halteeinheit 3 mindestens zwei Klemmflächen, hier eine erste Klemmfläche 5 und eine zweite Klemmfläche 6. Mindestens eine der Klemmflächen 5, 6, hier die erste Klemmfläche 5, ist dabei bezüglich der Stange 1 bewegbar ausgebildet und mindestens eine der Klemmflächen 5, 6, hier die erste Klemmfläche 5, umfasst den komplementären Zahnungsabschnitt 4.

In der vorliegenden Ausführungsform ist die erste Klemmfläche 5 Teil eines Klemmelementes 7 und die zweite Klemmfläche 6 ist Teil eines Gehäuses 8. Mit anderen Worten kann auch gesagt werden, dass die Halteeinheit 3 ein Gehäuse 8 und ein Klemmelement 7 umfasst, wobei das Klemmelement 7 im Gehäuse 8 bewegbar gelagert ist. Die erste Klemmfläche 5 wird durch eine Oberfläche des Klemmelementes 7 bereitgestellt, während die zweite Klemmfläche 6 Teil des Gehäuses 8 ist.

Das Klemmelement 7 steht über eine Drehachse 10, die durch zwei Lagerstellen bzw. Drehpunkte 28 definiert wird, mit dem Gehäuse 8 in Verbindung, wobei das Klemmelement 7 bezüglich der zweite Klemmfläche 6 bzw. bezüglich der Stange 1 um die Drehachse 10 herum verschwenkbar ist. Die Drehachse 10 steht in der Figur 1 senkrecht zur Blattrichtung und erstreckt sich zudem vorzugsweise senkrecht zur Längsachse L der Stange 1.

In der vorliegenden Ausführungsform weist das Klemmelement 7 einen Lagerungsabschnitt 11 auf, welcher gegenüber von der Klemmfläche 5 angeordnet ist und über welchen das Klemmelement 7 mit dem Gehäuse 8 in Verbindung steht. Die Klemmfläche 5 hat hier die Gestalt einer Ausnehmung, welche sich in das Klemmelement 7 hinein erstreckt und hier mit einer konkaven Oberfläche 12 ausgebildet ist. Die konkave Oberfläche 12 weist dabei im wesentlichen eine komplementäre Form zur Stangenoberfläche 13 auf. Folglich erstreckt sich die konkave Oberfläche 12 ebenfalls entlang der Längsrichtung L und weist senkrecht zur Längsrichtung L gesehen die Gestalt eines Kreissegmentes auf. In der konkaven Oberfläche 12 ist der komplementäre Zahnungsabschnitt 4 angeordnet.

Das Klemmelement 7 bzw. die erste Klemmfläche 5 nimmt im wesentlichen zwei Positionen ein, nämlich eine die Stange 1 klemmende Position und eine die Stange 1 freigebende Position, in welcher die Stange 1 bezüglich des Klemmelementes 7 verschiebbar ist. In der freigebenden Position ist das Klemmelement 7 bzw. die erste Klemmfläche 5 bezüglich der Stange 1 von derselben weg verschwenkt.

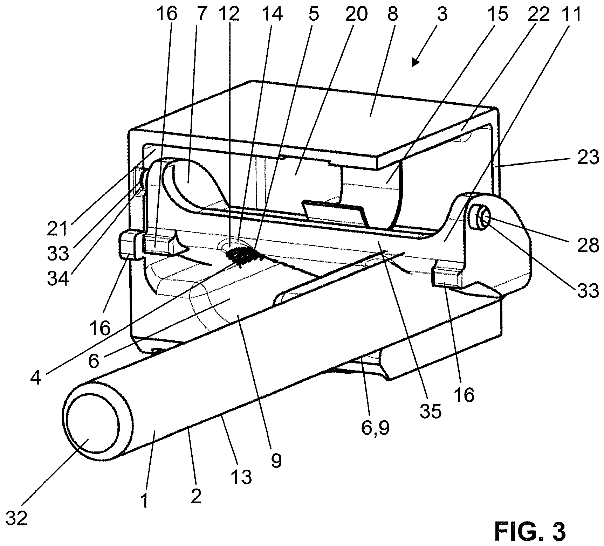

Die zweite Klemmfläche 6 ist ebenfalls eine konkave Oberfläche bzw. eine konkave Ausnehmung 9, wobei diese ebenfalls einen Querschnitt aufweist, welcher zur Stangenoberfläche 13 komplementär ausgebildet ist. Mit anderen Worten kann auch gesagt werden, dass die konkave Oberfläche 9 durch eine gerundete Ausnehmung oder Nut bereitgestellt wird, so wie dies in der Figur 3 gut zu erkennen ist. Durch diese Ausbildung wird die Stange 1 bezüglich einer axialen Abweichung gut in der Halteeinheit 3 geführt. Die Oberfläche 9 kann aber alternativ auch als ebene Fläche ausgebildet sein und steht bezüglich des Gehäuses 8 ortsfest. Optional kann die zweite Klemmfläche 6 mit einer die Reibung zwischen Stange 1 und Klemmfläche 6 erhöhenden Struktur ausgebildet sein, wie beispielsweise mit quer zur Längsachse L verlaufenden Rillen oder einem Zahnungsabschnitt.

In der Figur 3 kann der Einbau des Klemmelementes 7 im Gehäuse 8 gut erkannt werden. Das Gehäuse 8 ist hier teilweise geschnitten dargestellt und umfasst im wesentlichen einen Aufnahmeraum 20, welcher durch eine Frontöffnung 21 zugänglich ist. Der Aufnahmeraum 20 dient im wesentlichen der Aufnahme bzw. Bereitstellung der beiden Klemmflächen 5, 6 und der Stange 1. Folglich ist das Klemmelement 7 hier im Aufnahmeraum 20 angeordnet. Über die Frontöffnung 21 wird die Stange 1 in den Aufnahmeraum 20 zugeführt. Der Aufnahmeraum 20 wird dabei durch Seitenwände 22 und durch eine Rückwand 23 umgeben. Die Rückwand 23 ist gegenüber der Frontöffnung 21 angeordnet. In der Rückwand 23 können Durchführöffnungen 24 vorhanden sein, durch welche die Stange 1 hindurchführbar ist. Diese Durchführöffnungen 24 weisen einen Durchmesser auf, welcher im wesentlichen mindestens dem Aussendurchmesser der Stange 1 entspricht.

Das Klemmelement 7 steht über Lagerstellen 28 mit dem Gehäuse 8 in Verbindung. Eine Lagerstelle 28 umfasst einen Zapfen 33, hier am Lagerungsabschnitt 11 des Klemmelementes 7 angeformt, und eine Lageröffnung 34, hier im Bereich der Seitenwand 22 des Gehäuses 8 angeordnet. Über diese Lagerstellen 28, welche zugleich die Drehachse 10 definieren, steht das Klemmelement 7 schwenkbar mit dem Gehäuse 8 in Verbindung.

Weiter kann in den Figuren 1 bis 3 gut erkannt werden, dass ein Federmittel 15 derart im Aufnahmeraum 20 angeordnet ist, dass das Klemmelement 7 mit der ersten Klemmfläche 5 gegen die Stange 1 bzw. die zweite Klemmfläche 6 gedrückt wird. Hier hat das Federmittel 15 die Gestalt einer Blattfeder, welche zwischen einer Seitenwand 22 des Gehäuses 8 und dem Klemmelement 7 angeordnet ist. Vorzugsweise wird das Federelement 15 fest mit dem Gehäuse 8 verbunden oder ist daran angeformt. Alternativ kann auch eine Zugfeder angeordnet sein, welche eine entsprechende Kraft bereitstellt.

Mit Hilfe der Figuren 1 bis 3 wird im folgenden das Einschieben der Stange 1 und das Klemmen der Stange 1 durch die Halteeinheit 3 erläutert.

In Montagerichtung M gesehen umfasst die erste Klemmfläche 5 bzw. das erste Klemmelement 7 eine Anfasung 14. In der Ausgangsstellung, also wenn keine Stange 1 zwischen den beiden Klemmflächen 5 und 6 liegt, steht die Anfasung 14 so, dass die Stange 1 bei einer Bewegung in Montagerichtung M mit der Anfasung 14 in Kontakt kommt und so das Klemmelement 7 um die Drehachse 10 in die freigebende Position verschwenkt. Während der Bewegung in Montagerichtung M bleibt die Stange über deren Oberfläche 13 mit der Anfasung 14 bzw. der ersten Klemmfläche 5 in Kontakt, womit das Klemmelement 7 in der verschwenkten, also in der freigebenden, Position verbleibt. Zusätzlich oder alternativ zur Anfasung 14 steht die erste Klemmfläche 5 in der Ausgangsstellung leicht winklig bzw. geneigt zur zweiten Klemmfläche 6. Die Neigung ist dabei so gewählt, dass die lichte Weite im Querschnitt nach Figuren 1 und 2 gesehen zwischen der ersten Klemmfläche 5 und der zweiten Klemmfläche 6 bezüglich der Montagerichtung M leicht abnimmt. Mit anderen Worten heisst dies, dass die Distanz zwischen erster Klemmfläche 5 und zweiter Klemmfläche 6 bezüglich der Montagerichtung M kleiner wird. Folglich wird die lichte weite über die Länge der Klemmflächen 5, 6 von der Frontöffnung 21 zur Durchführöffenung 24 gesehen kleiner.

Zusammenfassend wird die erste Klemmfläche 5 zur zweiten Klemmfläche 6 aufgrund der Anfasung 14 und/oder der winkligen Ausbildung der zweiten Klemmfläche 6 bei einer Bewegung der Stange 1 verschwenkt, wodurch die Stange 1 in Montagerichtung M in die Halteeinheit 3 einschiebbar ist. Durch die winklige Anordnung der beiden Klemmflächen 5, 6 zueinander kann auch gesagt werden, dass eine gewisse Selbsthemmung zwischen Klemmflächen 5, 6 und Stange 1 auftreten kann.

Wenn die Stange 1 bezüglich der Klemmflächen 5, 6 ruht oder entgegen der Montagerichtung M verschoben wird, so wird das Klemmelement 7 gegen die Stange 1 gedrückt und der Zahnungsabschnitt 4 ragt in die Aussenzahnung 2 ein, womit die Stange 1 gegen eine Verschiebung in Richtung R, also entgegen der Montagerichtung M, gesichert ist. Bei einer Zugkraft gegen die Montagerichtung M wird das Klemmelement 7 aufgrund der Verbindung des Zahnungsabschnittes 4 und der Aussenzahnung gegen die zweite Klemmenfläche 6 verschwenkt, was die Klemmkraft auf die Stange 1 weiter erhöht. Dies wird durch die winklige bzw. geneigte Anordnung der Klemmflächen 5, 6 zueinander begünstigt.

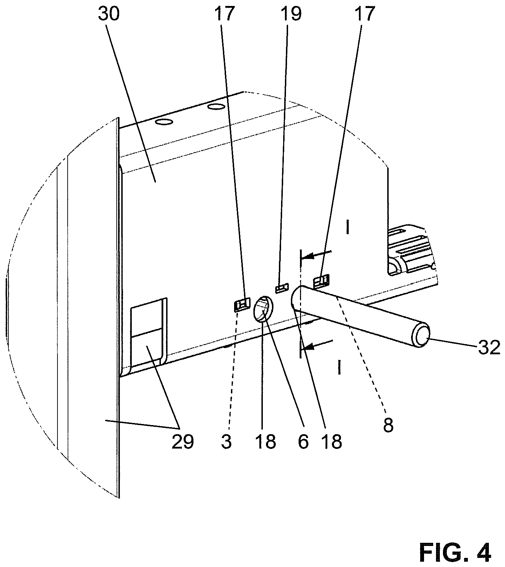

In der Figur 4 wird eine mögliche Einbauvariante der Halteeinheit 3 gezeigt. Bevorzugterweise steht das System mit dem Gehäuse 8 im eingebauten Zustand mit einem Rahmen 29 in Verbindung. Der Rahmen 29 umfasst dabei eine Frontplatte 30, auf welcher die Gebäudewand montiert wird. Vorzugsweise steht das Klemmelement 7 im Gebrauchszustand, also wenn eine Zugkraft entgegen der Montagerichtung M auf die Stange 1 wirkt, an der Frontplatte 30 an und leitet somit die entstehenden Kräfte auf die Frontplatte 30 ab. Die Frontplatte 30 wiederum leitet die Kräfte auf den Rahmen 29 ab.

In den Figuren 3 und 4 kann auch erkannt werden, dass das Klemmelement 7 zwei parallel zueinander angeordnete Klemmflächen 5 und zwei entsprechend angeordnete zweite Klemmflächen 6 umfasst. Mit einer solchen Anordnung kann das System bei verschiedenen Lochabständen im Sanitärartikel eingesetzt werden. Es ist zudem auch denkbar, mehrere Klemmflächenpaare 5, 6 nebeneinander anzuordnen.

In der Figur 3 ist auch gut zu erkennen, dass das Gehäuse 8 im wesentlichen einstückig ausgebildet ist. Vorzugsweise wird es mit einem Metalldruckgussverfahren, wie einem Zinkdruckgussverfahren, hergestellt.

Weiter können in der Figur 3 Positionierungselemente in der Gestalt von Nocken 16 erkannt werden, welche am Gehäuse 8 und am Klemmelement 7 angeformt sind. Es ist auch möglich, die Nocken 16 nur am Gehäuse 8 oder aber nur am Klemmelement 7 anzuordnen. Über diese Nocken 16 kann das System gegenüber der Frontplatte 30, die ein gleiches Lochbild mit Positionierungsöffnungen 17 aufweist, positioniert werden, so wie dies in der Figur 4 gezeigt wird.

Weiter umfasst die Frontplatte 30 zwei Durchführöffnungen 18, durch welche die Stange 1 der Halteeinheit 3 zuführbar sind. Zwischen den beiden Durchführöffnungen 18 auf der Höhe des Klemmelementes 7 ist zudem noch eine Entriegelungsöffnung 19 angeordnet, welche hier einen rechteckigen Querschnitt aufweist. Über diese Entriegelungsöffnung 19 kann das Klemmelement 7 mit einem entsprechenden Werkzeug, wie beispielsweise der Spitze eines Schraubendrehers betätigt werden, so dass sich das Klemmelement 7 in die freigebende Stellung verschwenkt wird und die Stange 1 entgegen der Montagerichtung M aus der Halteeinheit 3 herausgezogen werden kann. Dabei wird mit dem Werkzeug eine Kraft auf eine Oberfläche 35 des Klemmelementes 7 aufgebracht, welche in der Figur 3 bezeichnet ist.

Vorzugsweise hat die Aussenzahnung 2 der Stange 1 die Gestalt eines Gewindes, wobei die Stange 1 dann die Gestalt einer Gewindestange aufweisen kann. Der Zahnungsabschnitt 4 weist dann auch eine Vielzahl von unterbrochenen Gewindegängen auf, welche identisch zum Gewinde der Gewindestange ausgebildet sind. Unter unterbrochenen Gewindegängen werden Gewindegänge verstanden, welche am Umkreis unterbrochen sind, so dass sich die Gewindegänge nur über die konkave Oberfläche 12 erstrecken. Bei dieser Ausführungsform kann die Einstellung der Distanz D in zwei Schritten nämlich in einer Grobeinstellung und einer Feineinstellung erfolgen. Die Grobeinstellung erfolgt durch Einschieben der Gewindestange zwischen in Montagerichtung in die Halteeinheit 3 und die Feineinstellung über eine Drehung der Stange 1 um ihre Längsachse L herum.

In diesem Zusammenhang sei noch angemerkt, dass die Aussenzahnung 2 sich bezüglich der Längsachse L gesehen auch nur abschnittsweise über die gesamte Länge der Stange 1 erstrecken kann. Die anderen Bereiche, welche keine Aussenzahnung 2 umfassen könne beispielsweise als zylindrische Flächen ausgebildet sein.

Vorzugsweise weist die Stange 1 in ihrer vorderen Stirnfläche 32 eine hier nicht gezeigte Ausnehmung auf, über welche mit einem entsprechenden Werkzeug ein Drehmoment auf die Stange 1 ausübbar ist oder ein Drehmoment, das beim Anziehen der Befestigungsmittel entsteht, kompensierbar ist.

In einer alternativen Ausführungsform ist es zudem denkbar, dass beide Klemmflächen 5, 6 an je einem Klemmelement angeordnet sind, wobei dann beide Klemmelemente bezüglich der Stange 1 bzw. deren Längsachse L gegenüber voneinander angeordnet sind. Beide Klemmelemente können dann verschwenkbar ausgebildet sein. Mindestens eine der beiden Klemmflächen umfasst dabei wiederum einen Zahnungsabschnitt 4. Es ist aber auch möglich, beide Klemmflächen 5, 6 mit einem entsprechenden Zahnungsabschnitt 4 auszustatten.

Vorzugsweise sind die Durchführöffnungen 24 mit einem Bauschutz 31, insbesondere einer Bauschutzhülse versehen, so dass während des Einbaus des Systems kein Beton in die Halteeinheit 3 eindringen kann. Die Bauschutzhülse kann dabei einen Kanal in der Wand bereitstellen, in welchen die Stange 1 einschiebbar ist, womit eine grössere Einstellbarkeit der Länge D bei gleichbleibender Länge der Stange 1 geschaffen werden kann.

Bezüglich den Durchführöffnungen 24 sei noch angemerkt, dass insbesondere bei schweren Sanitärartikeln, welche ein grosses Biegemoment auf die Stange 1 ausüben, die Durchführöffnungen 24 als Abstützung für die aus dem Biegemoment resultierenden Kräfte dienen kann. Dabei muss die Stange 1 aber durch die Durchführöffnung 24 hindurch geschoben werden, so dass diese Biegemomentabstützung resultiert.

Bevorzugterweise kann die Aussenzahnung 2 und/oder der Zahnungsabschnitt 4 mit einer die Reibung zwischen der Aussenzahnung 2 und dem Zahnungsabschnitt 4 erhöhende Struktur versehen sein. Beispielsweise mit einer entsprechenden Beschichtung oder einer Änderung der Geometrie zwischen Aussenzahnung 2 und Zahnungsabschnitt 4.

In den Figuren wird das Klemmelement 7 bezüglich der Schwerkraft immer oberhalb der zweiten Klemmfläche 6 gezeigt. Eine bezüglich der Schwerkraft umgekehrte Anordnung wäre auch denkbar. Zudem wäre es auch denkbar, wenn die beiden Klemmflächen stehend, also bezüglich der Längsachse L um je 90° verdreht von der in den Figuren gezeigten Position angeordnet sind.

Mit einem hierin beschriebenen System zum Befestigen eines Sanitärartikels kann eine besonders einfache Vorrichtung zur Aufnahme einer handelsüblichen Stange geschaffen werden. Die Stange muss nicht vorgängig bearbeitet werden, um eine grobe Längeneinstellung zum System auszuführen.

**BEZUGSZEICHENLISTE**

| | | | |
|---|---|---|---|
| 1 | Stange | 21 | Frontöffnung |
| 2 | Aussenzahnung | 22 | Seitenwand |
| 3 | Halteeinheit | 23 | Rückwand |
| 4 | Zahnungsabschnitt | 24 | Durchführöffnungen |
| 5 | erste Klemmfläche | 25 | Gebäudewand |
| 6 | zweite Klemmfläche | 26 | vordere Oberfläche |
| 7 | Klemmelement | 27 | hintere Oberfläche |
| 8 | Gehäuse | 28 | Lagerstelle |
| 9 | konkave Oberfläche/Ausnehmung | 29 | Rahmen |
| 10 | Drehachse | 30 | Frontplatte |
| 11 | Lagerungsabschnitt | 31 | Bauschutz |
| 12 | konkave Oberfläche/Ausnehmung | 32 | Stirnfläche |
| 13 | Stangenoberfläche | 33 | Zapfen |
| 14 | Anfasung | 34 | Lageröffnung |
| 15 | Federmittel | 35 | Oberfläche |
| 16 | Nocken | D | Distanz |
| 17 | Positionierungsöffnungen | L | Längsrichtung |
| 18 | Durchführöffnungen | M | Montagerichtung |
| 19 | Entriegelungsöffnung | R | entgegengesetzte Richtung |
| 20 | Aufnahmeraum | | |

## Patentansprüche

1. System zum Befestigen eines Sanitärartikels, beispielsweise einer Klosettschüssel oder eines Urinals an einer Gebäudewand oder einem festen Gestell, wobei das System wenigstens eine Stange (1) mit einer Aussenzahnung (2) und eine Halteeinheit (3) mit einem zur Aussenzahnung (2) komplementären Zahnungsabschnitt (4) umfasst, wobei die Stange bezüglich der Halteeinheit (3) entlang ihrer Längsachse (L) in Montagerichtung (M) verschiebbar ist und bezüglich einer Bewegung (R) entgegen der Montagerichtung (M) durch diese klemmbar ist, wobei die Halteeinheit (3) ein Gehäuse (8) und mindestens zwei Klemmflächen (5, 6) zur Klemmung der Stange (1) umfasst, wovon mindestens eine Klemmfläche (5) bezüglich der Stange bewegbar ausgebildet ist, wobei diese Klemmfläche (5) durch die Bewegung der Stange (1) in Montagerichtung (M) von einer die Stange (1) klemmenden Stellung in eine die Stange (1) freigebende Stellung bewegbar ist, und wovon mindestens eine Klemmfläche (6) den komplementären Zahnungsabschnitt (4) umfasst,
wobei mindestens eine Klemmfläche (5, 6) Teil eines Klemmelementes (7) ist, welches bezüglich der Stange (1) verschwenkbar in der Halteeinheit (3) gelagert ist,
wobei das Klemmelement (7) im Gehäuse (8) mit mindestens einer durchgehenden Frontöffnung (21) angeordnet ist, wobei das Klemmelement über Drehpunkte (28), die eine Drehachse (10) definieren, mit dem Gehäuse in Verbindung steht,
und wobei das Gehäuse (8) mindestens eine Entriegelungsöffnung (19), durch welche die Halteeinheit (3), insbesondere das Klemmelement (7), mit einem Werkzeug verschwenkbar ist, umfasst.

2. System nach Anspruch 1, **dadurch gekennzeichnet, dass** mindestens eine der Klemmflächen (6, 5) bezüglich der Stange (1) feststehend in bzw. an der Halteeinheit (3) angeordnet ist.

3. System nach einem der vorhergehenden Ansprüche, **dadurch gekennzeichnet, dass** die bewegbare Klemmfläche (5) um eine Drehachse (10) bewegbar ist, wobei die Drehachse (10) im wesentlichen senkrecht und beabstandet zur Längsachse (L) der Stange (1) verläuft.

4. System nach einem der vorhergehenden Ansprüche, **dadurch gekennzeichnet, dass** das Klemmelement (7) eine Anfasung (14) umfasst, über welche die Stange (1) das Klemmelement (7) beim Einschieben der Stange (1) in die Halteeinheit (3) verschwenkt.

5. System nach einem der vorhergehenden Ansprüche, **dadurch gekennzeichnet, dass** die Klemmfläche (5, 6) die Gestalt einer konkaven Ausnehmung (9, 12) aufweisen, welche sich entlang der Längsachse (L) erstrecken, wobei die konkave Ausnehmung (9, 12) komplementär zur Stangenoberfläche (13) ausgebildet ist.

6. System nach einem der vorhergehenden Ansprüche, **dadurch gekennzeichnet, dass** der Zahnungsabschnitt (4) an der Klemmfläche (5) des bewegbaren Klemmelementes (7) angeordnet ist und/oder dass die feststehende Klemmfläche (6) im wesentlichen eine glatte oder eine die Reibung zwischen der Stange (1) und der Klemmfläche (6) erhöhende Struktur aufweist.

7. System nach einem der vorgehenden Ansprüche, **dadurch gekennzeichnet, dass** die erste Klemmfläche (5) geneigt zur zweiten Klemmfläche (6) steht, wobei die Neigung derart ist, dass die lichte Weite im Querschnitt durch die Längsachse (L) gesehen zwischen der ersten Klemmfläche (5) und der zweiten Klemmfläche (6) in der die Stange (1) klemmenden Position in Montagerichtung (M) gesehen über die Länge der Klemmflächen (5, 6) abnimmt.

8. System nach einem der vorhergehenden Ansprüche, **dadurch gekennzeichnet, dass** das Klemmelement (7) und die zweite Klemmfläche (6) im gemeinsamen Gehäuse angeordnet sind.

9. System nach einem der vorhergehenden Ansprüche, **dadurch gekennzeichnet, dass** das Klemmelement (7) mit mindestens einem Federelement (15) in Verbindung steht, welches das Klemmelement (7) mit einer Federkraft gegen die Stange (1) verspannt, wobei das Federmittel (15) insbesondere mit dem Gehäuse (8) in Verbindung steht oder am Gehäuse (8) angeformt ist.

10. System nach einem der vorhergehenden Ansprüche, **dadurch gekennzeichnet, dass** die Stange (1) die Gestalt einer Gewindestange mit einem Aussengewinde als Aussenzahnung (2) aufweist, und dass der Zahnungsabschnitt (4) die Gestalt eines Gewindeabschnittes aufweist, welcher sich über eine konkav ausgebildete Oberfläche (9, 12) erstreckt.

11. System nach einem der vorhergehenden Ansprüche, **dadurch gekennzeichnet, dass** mindestens zwei parallel zueinander angeordnete Zahnungabschnitte (4) vorhanden sind, so dass die Stange (1) an mindestens zwei verschiedenen Positionen positionierbar ist.

12. System nach einem der vorhergehenden Ansprüche, **dadurch gekennzeichnet, dass** die Klemmflächen (5, 6) und/oder die Stange (1) eine die Reibung zwischen der Stange (1) und der Klemmfläche (5, 6) erhöhende Struktur aufweisen.

13. System nach einem der vorhergehenden Ansprüche, **dadurch gekennzeichnet, dass** das Gehäuse (8) über Positionierungsnocken (16) verfügt, mit welchen die Halteeinheit (3) bezüglich eines Rahmensystems positionierbar ist und/oder dass das Gehäuse (8) eine Frontöffnung (21) umfasst, vor welcher eine Platte (30) anordbar ist, wobei die Platte Durchführöffnungen (18), zur Zuführung der Stange (1) zu den jeweiligen Klemmflächen (5, 6), Positionierungsöffnungen (17) zur Aufnahme der Positionierungsnocken (16) und wobei die Platte (30) die mindestens eine Entriegelungsöffnung (19) aufweist, durch welche das Klemmelement (7) mit einem entsprechenden Werkzeug betätigbar ist.

14. System nach einem der vorhergehenden Ansprüche, **dadurch gekennzeichnet, dass** die Halteeinheit (3) in Längsrichtung der Stange (1) gesehen gegenüber der Frontöffnung (16) eine Durchführöffnung (24) umfasst, durch welche die Stange (1) hinten aus der Halteeinheit (3) hinausführbar ist, wobei die Durchführöffnung (24) vorzugsweise durch einen Bauschutz (31) verschlossen ist.

## Claims

1. System for attaching a sanitary item, for example a lavatory pan or a urinal, to the wall of a building or a fixed frame, wherein the system comprises at least one rod (1) having external serrations (2) and a retaining unit (3) having a serration section (4) complementary to the external serrations (2), wherein the rod is capable of displacement in its longitudinal axis (L) relative to the retaining unit (3) in the direction of installation (M) and is capable of being clamped by same relative to a movement (R) against the direction of installation (M), wherein the retaining unit (3) comprises a housing (8) and at least two clamping surfaces (5, 6) for clamping the rod (1), of which at least one clamping surface (5) is configured for axial displacement relative to the rod, wherein said clamping surface (5) is capable of displacement by the displacement of the rod (1) in the direction of installation (M) from a position clamping the rod (1) into a position releasing the rod (1), and of which at least one clamping surface (6) comprises the complementary serration section (4), wherein at least one clamping surface (5, 6) is part of a clamping element (7), which is pivotably mounted in the retaining unit (3) relative to the rod (1), wherein the clamping element (7) is disposed in the housing (8) with at least one transcurrent front opening (21), wherein the clamping element is in contact with the housing (8) via pivot points (28), which define a pivot axis (10), and wherein the housing (8) comprises at least one unlocking opening (19), via which the retaining unit (3), in particular the clamping element (7), is capable of being caused to pivot with a tool.

2. System according to Claim 1, **characterized in that** at least one of the clamping surfaces (6, 5) is disposed relative to the rod (1) in a fixed manner in or on the retaining unit (3).

3. System according to one of the preceding claims, **characterized in that** the displaceable clamping surface (5) is capable of displacement about a pivot axis (10), wherein the pivot axis (10) runs substantially perpendicularly to and at a distance from the longitudinal axis (L) of the rod (1).

4. System according to one of the preceding claims, **characterized in that** the clamping element (7) comprises a chamfer (14), via which the rod (1) causes the clamping unit (7) to pivot when the rod (1) is pushed into the retaining unit (3).

5. System according to one of the preceding claims, **characterized in that** the clamping surfaces (5, 6) exhibit the form of a concave recess (9, 12), which extend along the longitudinal axis (L), wherein the concave recess (9, 12) is configured to be complementary to the rod surface (13).

6. System according to one of the preceding claims, **characterized in that** the serration section (4) is disposed on the clamping surface (5) of the displaceable clamping element (7) and/or **in that** the fixed clamping surface (6) essentially exhibits a smooth structure or a structure increasing the friction between the rod (1) and the clamping surface (6).

7. System according to one of the preceding claims, **characterized in that** the first clamping surface (5) is inclined in relation to the second clamping surface (6), wherein the nature of the inclination is such that the free clearance, viewed in cross section through the longitudinal axis (L), decreases over the length of the clamping surfaces (5, 6) between the first clamping surface (5) and the second clamping surface (6), viewed in the position clamping the rod (1) in the direction of installation (M).

8. System according to one of the preceding claims, **characterized in that** the clamping element (7) and the second clamping surface (6) are disposed inside the common housing.

9. System according to one of the preceding claims, **characterized in that** the clamping element (7) is in contact with at least one spring element (15), which tensions the clamping element (7) with a spring force against the rod (1), wherein the spring means (15) is in contact in particular with the housing (8) or is formed on the housing (8).

10. System according to one of the preceding claims, **characterized in that** the rod (1) exhibits the form of a threaded rod having an external thread as external serrations (2), and **in that** the serration section (4) exhibits the form of a threaded section which extends over a surface (9, 12) of concave configuration.

11. System according to one of the preceding claims, **characterized in that** at least two serration sections (4) disposed parallel to one another are present, so that the rod (1) is capable of being positioned in at least two different positions.

12. System according to one of the preceding claims, **characterized in that** the clamping surfaces (5, 6) and/or the rod (1) exhibit a structure increasing the friction between the rod (1) and the clamping surface (5, 6).

13. System according to one of the preceding claims, **characterized in that** the housing (8) possesses positioning lugs (16), with which the retaining unit (3) is capable of being positioned in relation to a frame system, and/or **in that** the housing (8) comprises a front opening (21), ahead of which a plate (30) is capable of being disposed, wherein the plate transcurrent openings (18) for feeding the rod (1) to the respective clamping surfaces (5, 6), positioning openings (17) for receiving the positioning lugs (16) and wherein the plate (30) preferably has at least one unlocking opening (1) through which the clamping element (7) can be actuated by a respective tool.

14. System according to one of the preceding claims, **characterized in that** the retaining unit (3), viewed in the longitudinal direction of the rod (1), comprises a transcurrent opening (24) in relation to the front opening (16), through which the rod (1) is capable of being withdrawn rearwards from the retaining unit (3), wherein the transcurrent opening (24) is preferably closed by means of a protection plug (31).

## Revendications

1. Système de fixation d'un article sanitaire, par exemple d'une cuvette de toilette ou d'un urinoir, à un mur de bâtiment ou à un bâti fixe, le système comprenant au moins une tige (1) avec une denture extérieure (2) et une unité de retenue (3) avec une portion de denture (4) complémentaire à la denture extérieure (2), la tige pouvant être déplacée dans la direction de montage (M) le long de son axe longitudinal (L) par rapport à l'unité de retenue (3) et pouvant être serrée par celle-ci par rapport à un déplacement (R) à l'encontre du sens de montage (M), l'unité de retenue (3) comprenant un boîtier (8) et au moins deux surfaces de serrage (5, 6) pour le serrage de la tige (1), dont au moins une surface de serrage (5) est réalisée de manière déplaçable par rapport à la tige, cette surface de serrage (5) pouvant être déplacée par le déplacement de la tige (1) dans la direction de montage (M) d'une position serrant la tige (1) dans une position libérant la tige (1), et dont au moins une surface de serrage (6) comprend la portion de denture complémentaire (4), au moins une surface de serrage (5, 6) faisant partie d'un élément de serrage (7) qui est supporté par rapport à la tige (1) de manière pivotante dans l'unité de retenue (3),
l'élément de serrage (7) étant disposé dans le boîtier (8) avec au moins une ouverture frontale traversante (21), l'élément de serrage étant en liaison avec le boîtier par le biais de points de pivot (28) qui définissent un axe de rotation (10), le boîtier (8) comprenant au moins une ouverture de déverrouillage (19) à travers laquelle l'unité de retenue (3), en particulier l'élément de serrage (7), peut être pivoté (e) au moyen d'un outil.

2. Système selon la revendication 1, **caractérisé en ce qu'**au moins l'une des surfaces de serrage (6, 5) est disposée par rapport à la tige (1) de manière fixe dans ou sur l'unité de retenue (3).

3. Système selon l'une quelconque des revendications précédentes, **caractérisé en ce que** la surface de serrage déplaçable (5) peut être déplacée autour d'un axe de rotation (10), l'axe de rotation (10) s'étendant essentiellement perpendiculairement et à distance de l'axe longitudinal (L) de la tige (1)

4. Système selon l'une quelconque des revendications précédentes, **caractérisé en ce que** l'élément de serrage (7) comprend un biseau (14) par le biais duquel la tige (1) fait pivoter l'élément de serrage (7) lors de l'insertion de la tige (1) dans l'unité de retenue (3).

5. Système selon l'une quelconque des revendications précédentes, **caractérisé en ce que** les surfaces de serrage (5, 6) présentent la forme d'un évidement concave (9, 12) qui s'étend le long de l'axe longitudinal (L), l'évidement concave (9, 12) étant réalisé de manière complémentaire à la surface de la tige (13).

6. Système selon l'une quelconque des revendications précédentes, **caractérisé en ce que** la portion de denture (4) est disposée au niveau de la surface de serrage (5) de l'élément de serrage déplaçable (7) et/ou **en ce que** la surface de serrage fixe (6) présente essentiellement une structure lisse ou une structure augmentant le frottement entre la tige (1) et la surface de serrage (6).

7. Système selon l'une quelconque des revendications précédentes, **caractérisé en ce que** la première surface de serrage (5) est inclinée par rapport à la deuxième surface de serrage (6), l'inclinaison étant telle que la largeur intérieure, vue en coupe transversale à travers l'axe longitudinal (L), diminue entre la première surface de serrage (5) et la deuxième surface de serrage (6) dans la position serrant la tige (1), vu dans la direction de montage (M), sur la longueur des surfaces de serrage (5, 6).

8. Système selon l'une quelconque des revendications précédentes, **caractérisé en ce que** l'élément de serrage (7) et la deuxième surface de serrage (6) sont disposés dans un boîtier commun.

9. Système selon l'une quelconque des revendications précédentes, **caractérisé en ce que** l'élément de serrage (7) est en liaison avec au moins un élément de ressort (15) qui serre l'élément de serrage (7) avec une force de ressort contre la tige (1), le moyen de ressort (15) étant notamment en liaison avec le boîtier (8) ou étant façonné sur le boîtier (8).

10. Système selon l'une quelconque des revendications précédentes, **caractérisé en ce que** la tige (1) présente la forme d'une tige filetée avec un filetage extérieur en tant que denture extérieure (2) et **en ce que** la portion de denture (4) présente la forme d'une portion filetée qui s'étend sur une surface réalisée sous forme concave (9, 12).

11. Système selon l'une quelconque des revendications précédentes, **caractérisé en ce qu'**au moins deux portions de denture (4) disposées parallèlement l'une à l'autre sont prévues, de telle sorte que la tige (1) puisse être positionnée au niveau d'au moins deux positions différentes.

12. Système selon l'une quelconque des revendications précédentes, **caractérisé en ce que** les surfaces de serrage (5, 6) et/ou la tige (1) présentent une structure augmentant le frottement entre la tige (1) et la surface de serrage (5, 6).

13. Système selon l'une quelconque des revendications précédentes, **caractérisé en ce que** le boîtier (8) dispose de cames de positionnement (16) avec lesquelles l'unité de retenue (3) peut être positionnée par rapport à un système de cadre et/ou **en ce que** le boîtier (8) comprend une ouverture frontale (21) devant laquelle peut être disposée une plaque (30), la plaque des ouvertures de passage (18) pour l'introduction de la tige (1) jusqu'aux surfaces de serrage respectives (5, 6), des ouvertures de positionnement (17) pour recevoir les cames de positionnement (16), dans lequel la plaque (30) présente de préférence au moins une ouverture à travers laquelle l'élément de serrage peut être actionné avec un outil correspondant.

14. Système selon l'une quelconque des revendications précédentes, **caractérisé en ce que** l'unité de retenue (3) comprend, vu dans la direction longitudinale de la tige (1) par rapport à l'ouverture frontale (16), une ouverture de passage (24) à travers laquelle la tige (1) peut être ressortie par l'arrière hors de l'unité de retenue (3), l'ouverture de passage (24) étant de préférence fermée par une protection de chantier (31) .
